# EUROPÄISCHE PATENTSCHRIFT

(11) **EP 1 159 516 B1**
(45) Veröffentlichungstag und Bekanntmachung des Hinweises auf die Patenterteilung: **22.09.2004**
(21) Anmeldenummer: 00987186.4
(22) Anmeldetag: 24.11.2000
(51) Int. Cl.: F01N 11/00

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, IN PARTICULAR OF A MOTOR VEHICLE
PROCEDE POUR FAIRE FONCTIONNER UN MOTEUR A COMBUSTION INTERNE EN PARTICULIER LE MOTEUR D'UN VEHICULE AUTOMOBILE

(30) Priorität: 31.12.1999 DE 19963903
(43) Veröffentlichungstag der Anmeldung: 05.12.2001
(73) Patentinhaber: ROBERT BOSCH GMBH, 70442 Stuttgart (DE)
(72) Erfinder: SCHNAIBEL, Eberhard, 71282 Hemmingen (DE); SCHNEIDER, Erich, 74366 Kirchheim (DE); KORING, Andreas, 71636 Ludwigsburg (DE); BLUMENSTOCK, Andreas, 71638 Ludwigsburg (DE)
(86) Internationale Anmeldenummer: PCT/DE2000/004169
(87) Internationale Veröffentlichungsnummer: WO 2001/049993

(56) Entgegenhaltungen:
- EP-A- 0 756 072
- DE-A- 19 811 574
- PATENT ABSTRACTS OF JAPAN vol. 018, no. 123 (M-1568), 28. Februar 1994 (1994-02-28) & JP 05 312024 A (MAZDA MOTOR CORP), 22. November 1993 (1993-11-22)
- PATENT ABSTRACTS OF JAPAN vol. 1996, no. 11, 29. November 1996 (1996-11-29) & JP 08 177469 A (NISSAN MOTOR CO LTD), 9. Juli 1996 (1996-07-09)
- PATENT ABSTRACTS OF JAPAN vol. 1996, no. 07, 31. Juli 1996 (1996-07-31) & JP 08 082213 A (NISSAN MOTOR CO LTD), 26. März 1996 (1996-03-26)
- SIDERIS, M.: "Methods for Monitoring and diagnosing the efficiency of catalytic converters - A Patent Oriented survey (Hitachi Ltd)" 1998 , ELSEVIER B.V. , AMSTERDAM XP002164926 Seite 145 -Seite 160

## Beschreibung

### Stand der Technik

Die Erfindung betrifft ein Verfahren zum Betreiben einer Brennkraftmaschine insbesondere eines Kraftfahrzeugs nach dem Oberbegriff des Anspruchs 1. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise aus der JP 8177469 A bekannt. Dort wird eine zweite Diagnose des Katalysators durchgeführt, wenn mit einer ersten Diagnose keine Entscheidung über den Zustand des Katalysators getroffen werden kann. Bei der zweiten Diagnose wird das zugeführte Luft/Kraftstoffgemisch gezielt abgemagert.

### Aufgabe, Lösung und Vorteile der Erfindung

Aufgabe der Erfindung ist es, das bekannte Verfahren zum Betreiben einer Brennkraftmaschine weiter zu verbessern.

Diese Aufgabe wird durch ein Verfahren nach Anspruch 1 gelöst.

Bei einem Steuergerät und einer Brennkraftmaschine der jeweils eingangs genannten Art wird die Aufgabe entsprechend gelöst. Die vorliegende Erfindung ist dabei gleichermaßen bei einer Saugrohreinspritzung wie bei einer direkteinspritzenden Brennkraftmaschine einsetzbar.

Mit dem passiven Diagnoseverfahren ist es möglich, schnell und ohne eine Einwirkung auf die Steuerung und/oder Regelung der Brennkraftmaschine die Konvertierungsfähigkeit und damit den Alterungszustand des Katalysators zu erkennen. Wenn sich der Katalysator jedoch in einem Übergangsbereich zwischen einer guten und einer schlechten Konvertierungsfähigkeit befindet, so wird das passive Diagnoseverfahren durch ein zusätzliches aktives Diagnoseverfahren ergänzt oder ersetzt. Dieses aktive Verfahren kann dann sehr genau die Konvertierungsfähigkeit und damit die Alterung des Katalysators erkennen.

Insgesamt wird durch die Erfindung ein Verfahren geschaffen, mit dem schnell, aber trotzdem sehr genau die Alterung des Katalysators ermittelt und insbesondere ein erforderlicher Austausch des Katalysators sicher erkannt werden kann.

Bei der Erfindung wird von dem passiven und dem aktiven Diagnoseverfahren jeweils ein Maß für die Konvertierungsfähigkeit des Katalysators erzeugt. Dieses Maß für die Konvertierungsfähigkeit kann insbesondere auf einem Vergleich einer Messgröße und einer Referenzgröße beruhen. Bei der Messgröße kann es sich zum Beispiel um eine Temperatur des Abgases nach dem Katalysator handeln.

Weiterhin wird bei der Erfindung das von dem aktiven Diagnoseverfahren erzeugte Maß für die Konvertierungsfähigkeit des Katalysators und das von dem passiven Diagnoseverfahren erzeugte Maß für die Konvertierungsfähigkeit einer Gewichtung unterzogen.

Besonders vorteilhaft ist es, wenn von dem passiven Diagnoseverfahren ein Aktivierungssignal erzeugt wird, wenn die Konvertierungsfähigkeit des Katalysators im Übergangsbereich von gut nach schlecht liegt. Dabei wird vorzugsweise das aktive Diagnoseverfahren von dem Aktivierungssignal aktiviert. Damit ist es in einfacher Weise möglich, das aktive Diagnoseverfahren genau dann zum Einsatz zu bringen, wenn das passive Diagnoseverfahren keine ausreichende Genauigkeit mehr gewährleistet. Die bei dem aktiven Diagnoseverfahren erforderlichen Eingriffe in die Steuerung und/oder Regelung der Brennkraftmaschine werden damit auf ein Minimum beschränkt.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Ausführungsbeispiele der Erfindung

- Figur 1: zeigt eine schematische Darstellung eines Ausführungsbeispiels einer erfindungsgemäßen Brennkraftmaschine, und
- Figur 2: zeigt ein schematisches Blockschaltbild eines erfindungsgemäßen Verfahrens zum Betreiben der Brennkraftmaschine der Figur 1.

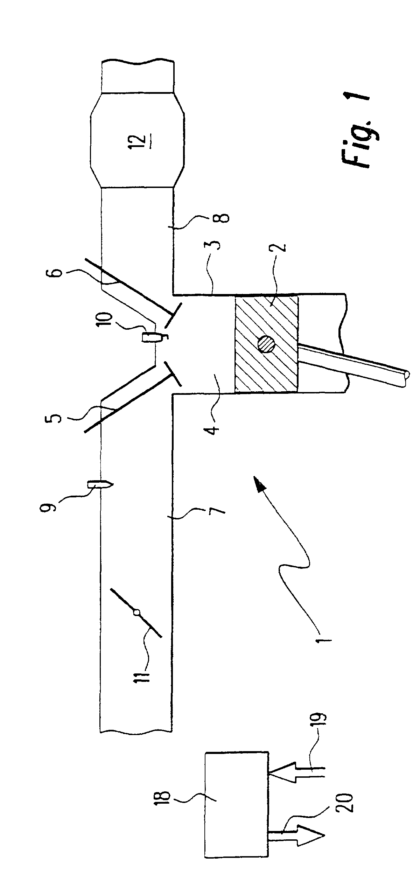

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Ansaugrohr 7 ist ein Einspritzventil 9 vorhanden. Im Bereich des Einlaßventils 5 und des Auslaßventils 6 ragt eine Zündkerze 10 in den Brennraum 4. Über das Einspritzventil 9 kann Kraftstoff in das Ansaugrohr 7 eingespritzt werden. Mit der Zündkerze 10 kann das angesaugte Luft/Kraftstoff-Gemisch in dem Brennraum 4 entzündet werden.

In dem Ansaugrohr 7 ist eine drehbare Drosselklappe 11 untergebracht. Die Menge der dem Brennraum 4 zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich im vorliegenden Fall einer Saugrohreinspritzung um einen Dreiwegekatalysator. Der Katalysator 12 ist dazu vorgesehen, Kohlenwasserstoffe (HC) unter anderem in Kohlendioxid zu konvertieren.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Im Betrieb der Brennkraftmaschine 1 entstehen Kohlenwasserstoffe, mit denen der Katalysators 12 beaufschlagt wird. Diese Kohlenwassserstoffe werden von dem Katalysator 12 in Kohlendioxid konvertiert. Die andauernde Konvertierung führt zu einer Einschränkung der Konvertierungsfähigkeit des Katalysators 12, die nachfolgend als Alterung bezeichnet wird.

Die Konvertierungsfähigkeit des Katalysators 12 kann mit passiven und aktiven Diagnoseverfahren ermittelt werden.

Bei einem passiven Diagnoseverfahren ist es möglich, einen zu untersuchenden Katalysator entweder als nicht gealtert oder als gealtert einzustufen. Voraussetzung hierfür ist, daß der Katalysator eindeutig entweder eine gute Konvertierungsfähigkeit oder eine schlechte Konvertierungsfähigkeit aufweist. Liegt die Konvertierungsfähigkeit jedoch gerade im Übergangsbereich von gut nach schlecht, so kann mit einem passiven Verfahren nicht oder nur sehr unzuverlässig auf die Alterung des Katalysators geschlossen werden. Mit einem passiven Verfahren können Katalysatoren somit nur während des ersten Teils ihrer Lebensdauer überprüft werden, also in einem weitgehend nicht gealterten Zustand. Danach ist ein passives Diagnoseverfahren zu ungenau.

Bei einem passiven Diagnoseverfahren wird ein Maß für die Konvertierungsfähigkeit des Katalysators, beispielsweise die Temperatur nach dem Katalysator oder Wärmeströme durch den Katalysator, ermittelt und mit einem Referenzmaß verglichen. Das Referenzmaß kann empirisch ermittelt oder analytisch modelliert werden. Das Referenzmaß kann z.B. auf einem neuen Katalysator, der also eine sehr gute Konvertierungsfähigkeit aufweist, oder auf einen sogenannten Grenzkatalysator, der eine gerade noch ausreichende Konvertierungsfähigkeit besitzt, beruhen.

Bei einem aktiven Diagnoseverfahren ist es möglich, einen zu untersuchenden Katalysator sehr genau entweder als nicht gealtert oder als gealtert einzustufen.

Bei einem aktiven Verfahren wird die Abgaszusammensetzung der Brennkraftmaschine gezielt verändert. Dies kann allgemein durch eine Veränderung des Betriebspunkts der Brennkraftmaschine erfolgen. Insbesondere ist es möglich, ein fettes Abgas am Ausgang des Brennraums der Brennkraftmaschine zu erzeugen, was durch eine zusätzliche Einspritzung nach einer Verbrennung und/oder durch den fetten Betrieb einiger Zylinder erreicht werden kann. Durch derartige Maßnahmen wird eine zusätzliche Konvertierung durch den Katalysator erreicht, die z.B. anhand einer daraus resultierenden Temperaturerhöhung des aus dem Katalysator ausströmenden Abgases ermittelt werden kann. Diese Temperaturerhöhung kann dann als Maß für die Konvertierungsfähigkeic des Katalysators herangezogen werden.

Wie erwähnt, ist es mit einem aktiven Diagnoseverfahren möglich, die Konvertierungsfähigkeit und damit die Alterung des Katalysators genau zu ermitteln. Gleichzeitig muß jedoch bei einem aktiven Verfahren die Veränderung der Abgaszusammensetzung in irgend einer Weise wieder gewährleistet werden.

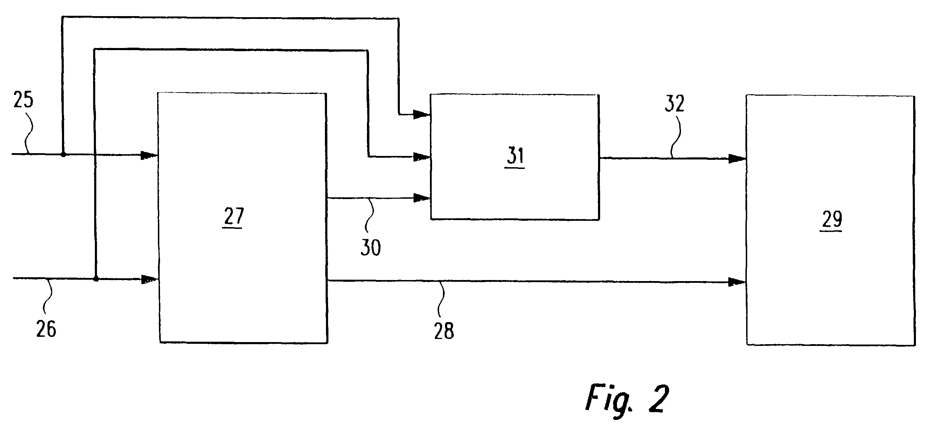

In der Figur 2 ist ein Verfahren zum Betreiben der Brennkraftmaschine 1 dargestellt, mit dem die Konvertierungsfähigkeit des Katalysators 12 mittels einer Kombination aus einem passiven und einem aktiven Diagnoseverfahren ermittelt wird. Das Verfahren wird von dem Steuergerät 18 in zeitlichen Abständen oder infolge vorgegebener Ereignisse durchgeführt.

Eine Meßgröße 25 und eine Referenzgröße 26 werden einem passiven Diagnoseverfahren 27 zugeführt. Bei der Meßgröße 25 kann es sich beispielsweise um das Ausgangssignal eines Temperatursensors handeln, der z.B. am Ausgang des Katalysators 12 angeordnet sein kann. Bei der Referenzgröße 26 kann es sich insbesondere um ein Ausgangssignal handeln, das von dem vorgenannten Sensor an einem Referenzkatalysator gemessen und dann in dem Steuergerät 18 gespeichert worden ist.

Von dem passiven Diagnoseverfahren 27 wird in Abhängigkeit von der Meßgröße 25 und der Referenzgröße 26 ein Maß 28 für die Konvertierungsfähigkeit des Katalysators 12 ermittelt. Dieses Maß 28 wird an eine Bewertung 29 weitergeleitet, die in Abhängigkeit von dem Maß 28 entscheidet, ob der Katalysator 12 aufgrund seiner Alterung ausgetauscht werden muß oder nicht.

Wie erläutert wurde, kann auf der Grundlage des passiven Diagnoseverfahrens 27 nur dann eine eindeutige Entscheidung über den Alterungszustand des Katalysators 12 getroffen werden, wenn die Konvertierungsfähigkeit desselben nicht im Übergangsbereich von gut nach schlecht liegt. Ist dies jedoch der Fall, so wird dies von dem passiven Diagnoseverfahren 27 erkannt. Es wird dann ein Aktivierungssignal 30 an ein aktives Diagnoseverfahren 31 weitergegeben. Das Maß 29 für die von dem passiven Diagnoseverfahren ermittelte Konvertierungsfähigkeit wird dabei weiterhin an die Bewertung 29 weitergegeben.

Von dem aktiven Diagnoseverfahren wird in Abhängigkeit von der Meßgröße 25 und der Referenzgröße 26 ein Maß 32 für die Konvertierungsfähigkeit des Katalysators 12 ermittelt. Dieses Maß 32 wird an die Bewertung 29 weitergeleitet. Der Bewertung 29 liegen somit nunmehr das Maß 28 des passiven Diagnoseverfahrens und das Maß 32 des aktiven Diagnoseverfahrens vor.

In Abhängigkeit von dem Maß 28 und dem Maß 32 entscheidet die Bewertung über die Konvertierungsfähigkeit und damit über den Alterungszustand des Katalysators 12. Dabei wird eine Gewichtung der beiden Eingangsgrößen vorgenommen.

Ist das Aktivierungssignal 30 nicht aktiv, dann erzeugt das aktive Diagnoseverfahren 31 kein Ausgangssignal, so daß von der Bewertung 29 nur das von dem passiven Diagnoseverfahren 27 erzeugte Maß 28 für die Konveroierungsfärigkeit des Katalysators 12 verarbeitet wird.

## Patentansprüche

1. Verfahren zum Betreiben einer Brennkraftmaschine (1) insbesondere eines Kraftfahrzeugs, bei dem ein Katalysator (12) mit Kohlenwasserstoffen beaufschlagt wird, und bei dem die Konvertierungsfähigkeit des Katalysators (12) mittels eines passiven und eines aktiven Diagnoseverfahrens (27, 31) ermittelt wird, wobei das aktive Diagnoseverfahren (31) durchgeführt wird, wenn von dem passiven Diagnoseverfahren (27) keine eindeutige Entscheidung über die Konvertierungsfähigkeit des Katalysators (12) getroffen werden kann, wobei; von dem passiven und dem aktiven Diagnoseverfahren (27, 31) jeweils ein Maß (28, 32) für die Konvertierungsfähigkeit des Katalysators (12) erzeugt wird, **dadurch gekennzeichnet, dass** zur Ermittlung der Konvertierungsfähigkeit des Katalysators (12) eine Gewichtung der von dem passiven und dem aktiven Diagnoseverfahren (27, 31) erzeugten Maße (28, 32) vorgenommen wird.

2. Verfahren nach Anspruch 1, **dadurch gekennzeichnet, daß** von dem passiven Diagnoseverfahren (27) ein Aktivierungssignal (30) erzeugt wird, wenn die Konvertierungsfähigkeit des Katalysators (12) im Übergangsbereich von gut nach schlecht liegt.

3. Verfahren nach Anspruch 2, **dadurch gekennzeichnet, daß** das aktive Diagnoseverfahren (31) von dem Aktivierungssignal (30) aktiviert wird.

4. Verfahren nach einem der Ansprüche 1 bis 3, **dadurch gekennzeichnet, daß** das Maß (28, 32) für die Konvertierungsfähigkeit in Abhängigkeit von einer Messgröße (25) und einer Referenzgröße (26) erzeugt wird.

5. Speichermedium, insbesondere Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Anwendung eines Verfahrens nach einem der Ansprüche 1 bis 4 programmiert ist.

6. Steuergerät (18) für eine Brennkraftmaschine (1) insbesondere eines Kraftfahrzeugs, das zur Anwendung eines Verfahrens nach einem der Ansprüche 1 bis 4 hergerichtet ist.

7. Brennkraftmaschine (1) insbesondere für ein Kraftfahrzeug mit einem Steuergerät (18), das zur Anwendung eines Verfahrens nach einem der Ansprüche 1 bis 4 hergerichtet ist.

## Claims

1. Method for operating an internal combustion engine (1), in particular of a motor vehicle, in which hydrocarbons are fed to a catalytic converter (12) and in which the conversion capacity of the catalytic converter (12) is determined by means of a passive and an active diagnostic method (27, 31), the active diagnostic method (31) being carried out if it is not possible for the passive diagnostic method (27) to arrive at an unambiguous decision about the conversion capacity of the catalytic converter (12), the passive and the active diagnostic methods (27, 31) each generating a measure (28, 32) for the conversion capacity of the catalytic converter (12), **characterized in that** the measures (28, 32) which are generated by the passive and active diagnostic methods (27, 31) are weighted in order to determine the conversion capacity of the catalytic converter (12).

2. Method according to Claim 1, **characterized in that** the passive diagnostic method (27) generates an activation signal (30) if the conversion capacity of the catalytic converter (12) lies in the transition region from good to bad.

3. Method according to Claim 2, **characterized in that** the active diagnostic method (31) is activated by the activation signal (30).

4. Method according to one of Claims 1 to 3,
**characterized in that** the measure (28, 32) for the conversion capacity is generated as a function of a measurement variable (25) and a reference variable (26).

5. Storage medium, in particular flash memory, for a control unit (18) of an internal combustion engine (1), in particular of a motor vehicle, on which a program is stored which can run on an arithmetic unit, in particular on a microprocessor, and is programmed to apply a method according to one of Claims 1 to 4.

6. Control unit (18) for an internal combustion engine (1), in particular of a motor vehicle, which is designed to apply a method according to one of Claims 1 to 4.

7. Internal combustion engine (1), in particular for a motor vehicle having a control unit (18) which is designed to apply a method according to one of Claims 1 to 4.

## Revendications

1. Procédé de fonctionnement d'un moteur à combustion interne (1), notamment d'un véhicule automobile, selon lequel un catalyseur (12) est alimenté en hydrocarbures, et la capacité de conversion du catalyseur (12) est déterminée au moyen d'un procédé de diagnostic passif et actif (27, 31), le procédé de diagnostic actif (31) étant effectué lorsque le procédé de diagnostic passif (27) ne peut pas prendre de décision claire concernant la capacité de conversion du catalyseur (12), les procédés de diagnostic passif et actif (27, 31) générant respectivement une valeur (28, 32) pour la capacité de conversion du catalyseur (12),
**caractérisé en ce que**
pour déterminer la capacité de conversion du catalyseur (12) une pondération des valeurs (28, 32) générées par les procédés de diagnostic passif et actif (27, 31) est effectuée.

2. Procédé selon la revendication 1,
**caractérisé en ce que**
le procédé de diagnostic passif (27) génère un signal d'activation (30) lorsque la capacité de conversion du catalyseur (12) se situe dans la zone de passage de bonne vers mauvaise.

3. Procédé selon la revendication 2,
**caractérisé en ce que**
le procédé de diagnostic actif (31) est activé par le signal d'activation (30).

4. Procédé selon l'une quelconque des revendication 1 à 3,
**caractérisé en ce que**
la valeur (28, 32) pour la capacité de conversion est générée en fonction d'une grandeur de mesure (25) et d'une grandeur de référence (26).

5. Moyen de mémoire notamment flash-memory pour un appareil de commande (18) d'un moteur à combustion interne (2), notamment d'un véhicule automobile, dans lequel est stocké un programme pouvant être exécuté sur un calculateur, notamment un microprocesseur, et programmé pour la mise en oeuvre d'un procédé selon l'une quelconque des revendications 1 à 4.

6. Appareil de commande (18) pour un moteur à combustion interne (1), notamment d'un véhicule automobile, prévu pour la mise en oeuvre d'un procédé selon l'une quelconque des revendications 1 à 4.

7. Moteur à combustion interne (1), notamment pour un véhicule automobile, comprenant un appareil de commande (18) prévu pour la mise en oeuvre d'un procédé selon l'une quelconque des revendications 1 à 4.
